# EUROPEAN PATENT APPLICATION

(11) **EP 4 850 905 A1**
(43) Date of publication of application: **09.12.2026**
(21) Application number: 26172008.0
(22) Date of filing: 13.04.2026
(51) Int. Cl.: B32B 27/12, B32B 5/02, B32B 5/08, B32B 27/30, B32B 27/34, B32B 27/40

(54) **COMPOSITE MATERIAL COMPRISING RECYCLED FIBRES FOR AUTOMOTIVE APPLICATIONS AND METHOD OF PRODUCTION THEREOF**

(30) Priority: 02.06.2025 PT 2025120305
(71) Applicant: Simoldes Plásticos, SA, Oliveira de Azeméis, 3721-902 Santiago de Riba-UL (PT); Citeve - Centro Tecnológico das Indústrias Têxtil e do Vestuário de Portugal, 4760-034 Vila Nova de Famalicão (PT); TMG Tecidos Plastificados e Outros Revestimentos Para A Industria Automovel SA, 4770-590 Vila Nova de Famalicão - São Cosme Vale (PT)
(72) Inventor: Duarte Dias, Tony Filipe, 3721-902 Oliveira de Azemeis (PT); Da Silva Costa, Maria Teresa, 3721-902 Oliveira de Azemeis (PT); Pereira Magalhães, João, 4520-145 Santa Maria da Feira (PT); Almeida Venceslau, Paulo Alexandre, 3721-902 Oliveira de Azemeis (PT); Campos de Oliveira, Cristina Manuela, 4760-034 Vila Nova de Famalicão (PT); Machado de Oliveira, Fernando Gabriel, 4760-034 Vila Nova de Famalicão (PT); Gonçalves De Moura, Isabel, 4760-034 Vila Nova de Famalicão (PT); de Almeida e Costa, Linda, 4760-034 Vila Nova de Famalicão (PT); Barbosa Fernandes, Eduarda, 4760-034 Vila Nova de Famalicão (PT); Fareleiro, Teresa, 4770-583 Vila Nova de Famalicão (PT)
(74) Representative: Patentree

(57) **Abstract**

The present disclosure relates to a composite material suitable for automotive applications, methods of manufacturing such composite material, and automotive interior parts made therefrom.

It is disclosed a composite material for automotive applications, comprising at least one nonwoven fabric layer, wherein: the at least one nonwoven fabric layer comprises fibres, wherein up to 80% by weight of the fibres are recycled fibres; wherein the recycled fibres are obtained from post-consumer domestic waste, end-of-life vehicles (ELV), post-industrial waste, or a combination thereof; and wherein the fibres of the at least one nonwoven fabric layer are bonded together to form said composite material by thermomechanical bonding.

## Description

### TECHNICAL FIELD

The present disclosure relates to the field of automotive interior components, particularly to the development and manufacturing of composite materials for use in automotive interiors, such as headliners, vehicle consoles, door panels, hood liners, side trims, among others, with enhanced sustainability features.

More specifically, it pertains to methods for recycling and reprocessing end-of-life materials, including industrial and post-consumer waste, into reusable fibres. These methods facilitate the production of environmentally friendly, monolayer and multilayer composite materials that exhibit high circularity, a low carbon footprint, and improved recyclability for automotive applications.

### BACKGROUND

Automotive interior garnishes are critical components of vehicle interiors, serving multiple functions including enclosing means, acoustic and thermal insulation, safety, and aesthetic enhancement, among others. Despite their utility, conventional headliners are predominantly made from non-renewable, synthetic materials such as polyurethane foams, wrapped with polyester fabrics, and thermoset composite layers. These materials are chosen for their durability and performance characteristics, yet they come at a significant environmental cost. The manufacturing processes for such materials involve high energy consumption and carbon-intensive operations, contributing to a substantial carbon footprint.

Moreover, the lifecycle of current headliners poses a major challenge to sustainability. At the end of their useful life, headliners are rarely recycled due to the difficulty of separating their composite layers and the lack of economically viable recycling methods. As a result, the majority of end-of-life headliners are disposed of in landfills or incinerated, contributing to environmental pollution and resource wastage. Industrial production waste from headliner manufacturing faces similar disposal challenges, further exacerbating the environmental impact.

Efforts to reduce the environmental footprint of automotive components have driven the development of alternatives, such as biodegradable materials, bio-based composites, and partially recycled content. However, these solutions often face limitations in scalability, cost, performance and in some cases may divert resources away from the food supply chain. Additionally, while some progress has been made toward improving reusability, the integration of recycled materials in interior automotive components production remains low, and the reprocessing methods used are often energy intensive. Chemical recycling processes, for instance, require significant input energy, as all processes to separate composite structures or reprocess fibres.

To align with the global push toward sustainability and the automotive industry's commitment to reducing emissions and waste, there is an urgent need for technologies and products that are not only sustainable in production but also maintain high recyclability in end-of-life to leverage circularity. Specifically, solutions that allow post-consumer waste such as automotive components from end-of-life vehicles (ELVs) and post-industrial waste to be reintegrated into the production of new automotive components, such as headliners, are crucial for achieving a closed-loop system.

Document EP4534589A1 discloses a cover layer for automotive trim parts comprising a porous fibrous carrier layer and a polymeric thermoplastic matrix, wherein the polymeric thermoplastic matrix and the porous fibrous carrier layer form a composite layer forming the visible side of the cover layer. In the composite layer the polymeric thermoplastic matrix wraps the fibers of the carrier layer and saturates the pores between them and is such that the porous fibrous carrier layer remains visible, through the thermoplastic polymeric matrix itself, from the visible side of the cover layer.

Document CN119816404A discloses a process for recovering material from automotive trim component waste having at least a double layer comprising a thermoplastic elastomer composite layer and a fibrous layer wherein the fibers of the fibrous layer are interwoven with adjacent thermoplastic elastomer layers.

These facts are disclosed in order to illustrate the technical problem addressed by the present disclosure.

### GENERAL DESCRIPTION

The present disclosure relates to a composite material suitable for automotive applications, methods of manufacturing such composite material, and automotive interior parts made therefrom.

By implementing a thermoplastic-only architecture comprising a high proportion of recycled fibres mechanically bonded into a nonwoven structure and combined with a compatible layer of the same polymer family, the composite enables efficient mechanical reprocessing at end-of-life without chemical separation or material downgrading. This configuration not only reduces material waste and preserves polymer integrity through multiple lifecycle loops, but also maintains the mechanical strength, durability, acoustic performance, and aesthetic standards required by the automotive industry. The now disclosed technology therefore provides a technically robust circular solution that integrates recyclability at the structural level of the composite itself, thereby reducing lifecycle carbon footprint and resource consumption while preserving functional performance across repeated processing cycles.

The present disclosure addresses these pressing needs by proposing a revolutionary approach to automotive components manufacturing, such as headliners, that achieves sustainability through three core advancements:
i) **High Circularity:** By utilizing up to 80% of materials sourced from industrial waste and post-consumer products, this invention dramatically reduces reliance on virgin materials. It incorporates fibres and other components that would otherwise contribute to waste streams, transforming them into valuable resources for new automotive components, such as headliners, vehicle consoles, door panels, hood liners, side trims, among others. This circularity dimension is highly reinforced by allowing the materials from its own post-industrial waste production to be reintroduced on the product as the materials from its own end-of life treatment.
ii) **Low Carbon Footprint:** Unlike traditional methods that rely on chemical or high-temperature reprocessing of fibres, this invention adopts purely mechanical recovery techniques. While mechanical recycling should not always yield fibres of the same quality as virgin materials, it could produce viable and technical fibres for several applications and also significantly reduce the energy required for processing, cutting greenhouse gas emissions during manufacturing.
iii) **Enhanced Recyclability:** One aspect of the present disclosure relates, in particular, to developing headliners that can be efficiently recycled at the end of their lifecycle. The materials and processes employed are designed to ensure that headliners from ELVs can be reintegrated into the manufacturing of new headliners assuming a good compromise in terms of quality and performance.

This approach not only addresses the immediate environmental challenges posed by current headliner technologies but also aligns with long-term sustainability goals. By embracing circular economy principles, the present disclosure reduces waste, conserves resources, and minimizes environmental impact, all while delivering a product that meets the automotive industry's standards for functionality, durability, and aesthetics.

In summary, the present disclosure offers a transformative solution for the automotive industry, enabling the development of interior garnishes, such as headliners, that are environmentally friendly across their entire lifecycle - from production to end-of-life management. By combining high circularity, a low carbon footprint, and enhanced recyclability, this innovation represents a critical step toward more sustainable automotive manufacturing practices.

Unlike prior art automotive composite systems, such as those relying on matrix-saturated fibrous carriers or mechanically separable TPO-fibre laminates, the technology now disclosed does not merely disclose a composite structure or a recycling technique in isolation, but rather a structurally integrated, thermoplastic-only multilayer architecture specifically configured for repeated mechanical reprocessing while maintaining functional performance. In contrast to composite layers in which a matrix fully impregnates and encapsulates the fibrous carrier - thereby complicating fibre recovery and often relying on mixed or partially incompatible material systems - the claimed composite maintains distinct structural layers composed of polymers belonging to the same chemical family and substantially free of thermoset binders. Furthermore, unlike known recycling methods that focus primarily on separating fractions from fibre residues for downcycling or limited reintegration, the disclosed technology enables the recovered fibres to be directly re-formed into a high-performance needle-punched nonwoven layer suitable for the same category of automotive interior components. This combination of high recycled fibre content, polymer family compatibility, and retained mechanical and environmental performance is neither disclosed nor suggested in the cited prior art and therefore provides a technically distinct and non-obvious solution.

The advantages described in the present disclosure are not exhaustive. Other benefits, improvements, and features may be apparent to those skilled in the art upon reading this description, even if not explicitly listed herein.

An aspect of the disclosure comprises a composite material for automotive applications, comprising at least one nonwoven fabric layer, wherein: the at least one nonwoven fabric layer comprises fibres, wherein up to 80%, preferably from 60% to 80%, by weight of the fibres are recycled fibres; wherein the recycled fibres are obtained from post-consumer domestic waste, end-of-life vehicles (ELV), post-industrial waste, or a combination thereof; and wherein the fibres of the at least one nonwoven fabric layer are bonded together to form said composite material by thermomechanical bonding.

In an embodiment, the composite material is fully recoverable by mechanical separation and/or reprocessing.

In an embodiment, the fibres of the composite material are oriented in a configuration selected from the group consisting of parallel-laid, cross-laid, random-laid, and z-directional orientations.

In an embodiment, the composite material is mechanically bonded by needle punching.

In an embodiment, the fibres of the at least one nonwoven fabric layer of the composite material are mechanically bonded by Spunlace (Hydroentanglement).

In an embodiment, the fibres of the at least one nonwoven fabric layer of the composite material are mechanically bonded Stitchbonding.

In an embodiment, the fibres of the at least one nonwoven fabric layer of the composite material are thermal bonded.

In an embodiment, the fibres of the at least one nonwoven fabric layer of the composite material are chemically bounded by binders.

In an embodiment, the composite material further comprises a decorative layer such as synthetic leather, natural leather and/or fabrics, applied to the at least one nonwoven fabric layer, preferably by means of a hot melt adhesive.

In an embodiment, the fibres of the at least one nonwoven fabric layer of the composite material are selected from one or more of: polyester recycled fibres, preferably from end-of-life car seatbelts, seat covers, carpets, industrial waste, and/or post-consumer waste; polypropylene recycled fibres, preferably from end-of-life automotive components comprising Polypropylene fibres, such as interior trims, door panels, seat covers, air filters or headliners, and/or industrial waste and/or post-consumer waste; polyamide recycled fibres, preferably from end-of-life car airbags and/or industrial waste and/or post-consumer waste; hemp fibres, recycled or non-recycled; flax fibres, recycled or non-recycled; jute fibres, recycled or non-recycled; sisal fibres, recycled or non-recycled; cotton fibres, recycled or non-recycled; or any combination thereof.

In an embodiment, the at least one nonwoven fabric layer of the composite material further comprises thermal fusible fibres that soften or melt upon heating, for thermoforming of the composite material.

In an embodiment, the composite material further comprises at least one compact polymeric layer foil for thermoforming, in particular the at least one polymeric layer being selected from the group consisting of polyethylene terephthalate group (PET), thermoplastic elastomer group, such as TPE-O, TPE-V, TPE-S, TPE-A, TPE-U, Ethylene-Vinyl Acetate group (EVA), polypropylene group (PP), polyethylene group (PE), polyamide group (PA), polyurethane group (PU), Polybutylene terephthalate group (PBT), polycarbonate group (PC), Acrylonitrile Butadiene Styrene group (ABS), acrylonitrile styrene acrylate (ASA), styrene acrylonitrile (SAN) or any combination thereof.

Along this specification, it is considered that a compact polymeric layer is a non-fibrous polymeric layer matrix -potentially reinforced with fibers such as glass fibers to enhance mechanical performance-that is inherently non-porous but may include engineered perforations.

In an embodiment, the composite material comprises one compact polymeric layer and one nonwoven fabric layer; wherein said layers are stacked and thermally bonded forming a multilayer structure.

In an embodiment, the composite material comprises one compact polymeric layer and two nonwoven fabric layers; wherein said layers are intercalated and thermally bonded forming a multilayer structure.

In an embodiment, the composite material comprises two compact polymeric layers and three nonwoven fabric layers; wherein said layers are intercalated and thermally bonded forming a multilayer structure.

In an embodiment, a first nonwoven fabric layer of the composite material has a mass per unit of area of 200 to 400 g/m², preferably 250 to 350 g/m², and a second nonwoven fabric layer has a mass per unit of area of 800 to 1000 g/m², preferably 850 to 950 g/m².

In an embodiment, two outermost nonwoven fabric layers of the composite material have a mass per unit of area of 200 to 700 g/m², preferably 250 to 650 g/m², and an innermost fibre layer has a mass per unit of area of 200 to 400 g/m², preferably 250 to 350 g/m².

In an embodiment, the composite material has a thickness of 2 to 10 mm.

It is also described a method for producing a composite material for automotive applications, comprising the following steps: collecting end-of-life materials comprising fibres from post-consumer domestic waste, end-of-life vehicles (ELV), post-industrial waste, or a combination thereof; mechanically separating the materials to extract the recycled fibres; forming at least one nonwoven fabric layer by mechanical bonding fibres including the extracted recycled fibres; wherein the at least one nonwoven fabric layer comprises up to 80% by weight of recycled fibres.

In an embodiment, the method further comprises, stacking at least one compact polymeric foil with the at least one nonwoven fabric layer for forming a multilayer structure.

In an embodiment, the method further comprises the following steps: thermoforming the at least one nonwoven fabric layer, or the multilayer structure, by applying heat to soften or melt the stacked at least one compact polymeric layer and/or thermal fusible fibres of the at least one fibre layer; pressing the at least one nonwoven fabric layer, or the multilayer structure, in a mould to form a desired shape; cooling and solidifying the moulded composite material.

In an embodiment, the method further comprises a lamination step, preferably a hot lamination step, wherein two or more nonwoven fabric layers are laminated together, or wherein the at least one compact polymeric layer foil and the at least one nonwoven fabric layer stacked are laminated together, for forming a laminated composite.

In an embodiment, the method further comprises washing the collected end-of-life materials, in particular the washing including the use of chemical substances to remove greases, oils, or other contaminants.

In an embodiment, the method further comprises washing the collected end-of-life materials, in particular the washing using high temperature water or steam to remove greases, oils, or other contaminants.

In an embodiment, the step of mechanically separating the materials to extract the recycled fibres comprises cutting and/or mechanical grinding.

In an embodiment of the method, the at least one nonwoven fabric layer is obtained by needle punching said fibres for producing at least one nonwoven fabric layer.

In an embodiment of the method, the at least one nonwoven fabric layer is obtained by Spunlace (Hydroentanglement) said fibres for producing at least one nonwoven fabric layer.

In an embodiment of the method, the at least one nonwoven fabric layer is obtained Stitchbonding said fibres for producing at least one nonwoven fabric layer.

In an embodiment of the method, the at least one nonwoven fabric layer is obtained by thermal bonding said fibres for producing at least one nonwoven fabric layer.

In an embodiment of the method, the at least one nonwoven fabric layer is obtained by chemical bounding with binders of said fibres for producing at least one nonwoven fabric layer.

In an embodiment, the method further comprises trimming or finishing the composite material after the cooling and solidifying step.

In an embodiment of the method, the thermoforming is performed using infrared radiation or convection ovens.

In an embodiment of the method, the mould used in the pressing step includes cooling channels to accelerate the cooling process.

It is also described an automotive interior part comprising a composite material as the one described in this description and obtainable by the method, for producing a composite material for automotive applications described in this description.

In an embodiment, the automotive interior part is a front door panel, a rear door panel, a hood liner, a centre console, a sun visor, a trunk liner, a headliner, a parcel shelf, or a trunk side trim.

### BRIEF DESCRIPTION OF THE DRAWINGS

The following figures provide preferred embodiments for illustrating the disclosure and should not be seen as limiting the scope of invention.
**Figure 1****:** Schematic representation of the method of obtaining a composite material comprising recycled fibres, recycling and reprocessing of end-of-life materials waste into reusable fibres, according to the present disclosure, in particular a closed-loop manufacturing process.
**Figure 2****:** Schematic representation, in detail, of the process step of mechanical bonding the fibres, in particular needle punching, to form the composite material according to an embodiment of the present disclosure.
**Figure 3****:** Schematic representation of the thermoforming setup and the main steps involved in obtaining the shape-conforming composite material according to the present disclosure.
**Figure 4****:** Schematic representation of the composite material according to an embodiment a) with a single nonwoven fabric layer (i.e. monolayer); b) with a nonwoven fabric layer and a stacked compact polymeric layer; c) with Two nonwoven fabric layers stacked on a compact polymeric layer and/or adhesive layer in the middle; and d) with three nonwoven fabric layers intercalated with stacked compact polymeric layers and/or adhesive layers. The reference numerals representing:
   - **10**: a nonwoven fabric layer; and
   - **20**: a compact polymeric and/or adhesive layer.
**Figure 5****:** Schematic representation of a vehicle comprising automotive interior parts comprising the composite material according to the present disclosure. The reference numerals representing:
   - **30**: a vehicle;
   - **31**: a front door panel;
   - **32**: a rear door panel;
   - **33**: a hood liner;
   - **34**: a console;
   - **35**: sun visors;
   - **36**: a trunk liner;
   - **37**: a headliner;
   - **38**: a parcel shelf; and
   - **39**: a trunk side trim.

### DETAILED DESCRIPTION

The present disclosure relates to a composite material suitable for automotive applications, methods of manufacturing such composite material, and automotive interior parts made therefrom. More particularly, the invention relates to sustainable, reusable composite structures comprising recycled fibres, and to a closed-loop manufacturing method enabling the recovery, reprocessing, and reuse of such materials.

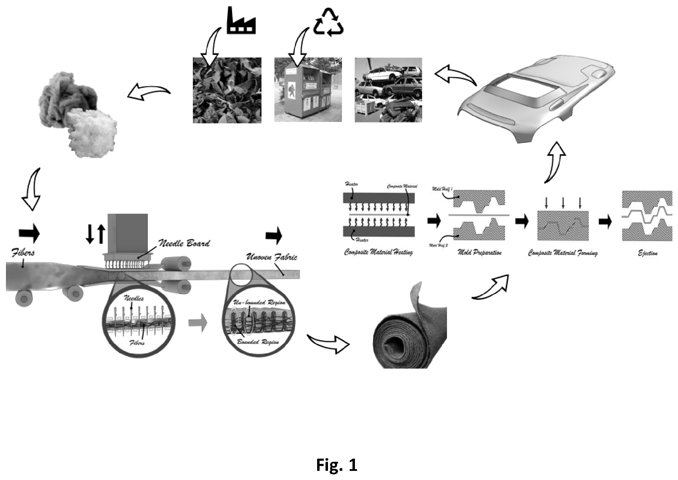

As shown in Figure 1, the method for producing the composite material involves a closed-loop process for recycling and reprocessing waste materials into reusable fibres. The source materials include post-consumer domestic waste, post-industrial waste, and end-of-life vehicles (ELVs). These materials are subjected to a mechanical separation process, optionally preceded or succeeded by washing (in particular using chemical or non-chemical methods such as water, steam, ultrasonic treatment, or degreasing agents to remove grease or contaminants), to extract recycled fibres. Mechanical processes such as cutting or grinding may be used to reduce the materials to fibre form.

The recycled fibres, constituting up to 80% by weight of the fibre content of the composite material, preferably from 60% to 80%, are formed into at least one nonwoven fabric layer, optionally in combination with other fibres or binders. The fibres may be selected from synthetic and/or natural origins, including but not limited to: polyester (e.g., from seatbelts, carpets, trims, or panels), polypropylene (e.g., from carpets, trims, panels or filters), polyamide (e.g., from carpets, or airbags), hemp, flax, jute, sisal, or cotton. In an embodiment, the fibres in the layer are preferably randomly oriented, improving isotropic strength in a nonwoven configuration.

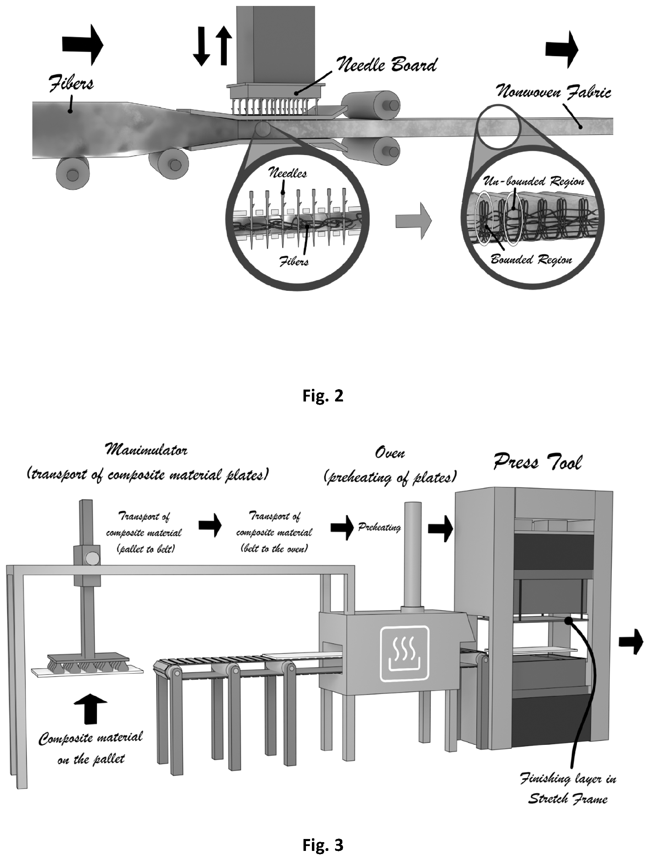

The fibres are bonded mechanically, preferably by needle punching, as depicted in Figure 1, and in detail in Figure 2, forming a nonwoven structure with sufficient cohesion for downstream processing. Figure 2 provides a more detailed visual representation of the process employed for mechanical bonding the fibres, in particular by needle punching. As illustrated, incoming loose fibres are directed toward a needle board equipped with an array of reciprocating needles. Figure 2 highlights a close-up of the needles themselves penetrating the web of fibres, facilitating fibre entanglement by driving them into and through the fibre layer. This repeated vertical action leads to physical interlocking of the fibres, thereby increasing the mechanical cohesion of the resulting nonwoven structure. Notably, the detailed figure further depicts a transitional region downstream from the needle board, where "unbound regions" - characterised by loosely packed fibres - contrast with "bound regions" where fibre consolidation has occurred as a direct result of the needle punching. The output from this step is a robust nonwoven fabric layer, shown emerging from the needle punching apparatus, which is suitable for subsequent thermoforming or composite layering. This visual progression from fibre input to consolidated fabric output underpins the efficiency and effectiveness of needle punching as a dry mechanical bonding technique, critical for sustainable composite material production.

The downstream processing is depicted schematically in Figure 1, as well, and in Figure 3, which show the main thermoforming steps that may be performed on the mechanically bonded fibres, i.e. the nonwoven fabric layer, forming the composite material. As illustrated in Figure 1, for forming into a given shape, the composite material may be pre-heated, then inserted into a mould, pressed, and subsequently ejected from the mould. The moulding process may also include thermoplastic overmolding by injection moulding.

As shown in Figure 3, the thermoforming setup may include a manipulator to move the composite material, for example, from a pallet to a belt and from the belt to an oven. The oven preheats the composite material (such as composite material plates including or not compact polymeric layers as well) before transferring it to the press tool, where it is pressed into the desired shape within a mould.

In an embodiment, the at least one nonwoven fabric layer includes thermal fusible fibres to assist with thermal bonding during forming. The fusible fibres may be thermoplastic in nature and are selected for their ability to soften or melt at specific processing temperatures, thereby promoting adhesion between layers or between the nonwoven fabric fibres, i.e. fibre layer, and other components of the composite material. During thermoforming or compression moulding, the fusible fibres melt partially or entirely, enabling the fibre network to consolidate and retain the desired shape upon cooling. The incorporation of thermal fusible fibres can, in certain final product applications, reduce or eliminate the need for additional layer/adhesives/binders, streamline the manufacturing process, and improve the structural integrity and dimensional stability of the final composite product. Other polymeric binder systems can be used.

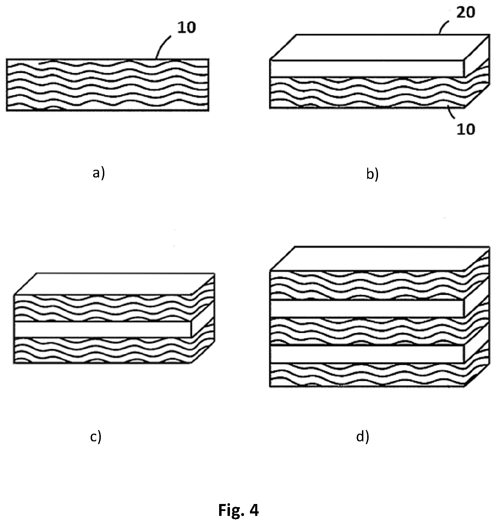

In a further embodiment, the at least one nonwoven fabric layer may be combined/stacked with at least one compact polymeric layer to form a multilayer composite, as illustrated in Figures 4b-4d. Figure 4a shows a monolayer composite comprising a single nonwoven fabric layer (10); Figure 4b shows a bilayer composite comprising one nonwoven fabric layer (10) and one stacked compact polymeric and/or adhesive layer (20), Figure 4c shows a trilayer structure with two nonwoven fabric layers stacked on a compact polymeric layer and/or adhesive layer in the middle; and figure 4d shows a five-layer structure with three nonwoven fabric layers (10) intercalated with two compact polymeric layers and/or adhesive layers (20).

The compact polymeric layer(s) may be selected from thermoplastics suitable for thermoforming, such as polyethylene terephthalate (PET), polypropylene (PP), polyethylene (PE), polyamide (PA), polyurethane (PU), Ethylene-Vinyl Acetate (EVA) or polycarbonate (PC), among others. These materials soften under heat, allowing the composite to be shaped using standard moulding tools, such as presented in the embodiments of Figures 1 and 3.

The thermoforming setup, shown in Figure 3, may involve heating the composite (e.g., using infrared or convection ovens), pressing the heated structure into a mould to define its shape, and cooling to solidify the structure. The mould may include cooling channels to accelerate this step. The resulting formed composite is then trimmed or finished in the same process or in a secondary one as needed.

The mass per unit area of each nonwoven fabric layer may be tailored for the intended application. In certain preferred embodiments, the composite material comprises: a nonwoven fabric layer which has a mass per unit of area of 200-400 g/m², preferably 250-350 g/m², and a second, thicker nonwoven fabric layer has 800-1000 g/m², preferably 850-950 g/m².

In a preferred five-layer configurations, the composite material has two outer nonwoven fabric layers having a mass per unit of area of 200-700 g/m², preferably 250-650 g/m², and the innermost nonwoven fabric layer has 200-400 g/m², preferably 250-350 g/m².

In a preferred two-layer configurations, the composite material has two outer nonwoven fabric layers having a mass per unit of area of 200-400 g/m² 200-400 g/m² (preferably 250-350 g/m²), and a second, compact polymeric layer with 1,5-3,5mm thickness (preferably 1-3mm).

The thickness of the composite material typically ranges from 2 to 10 mm, providing both flexibility and structural integrity for vehicle interior components.

Optionally, a decorative layer, such as fabric or natural/artificial leather may be applied to the exposed nonwoven fabric layer using adhesives, such as hot-melt adhesives, to provide aesthetic or functional finishes.

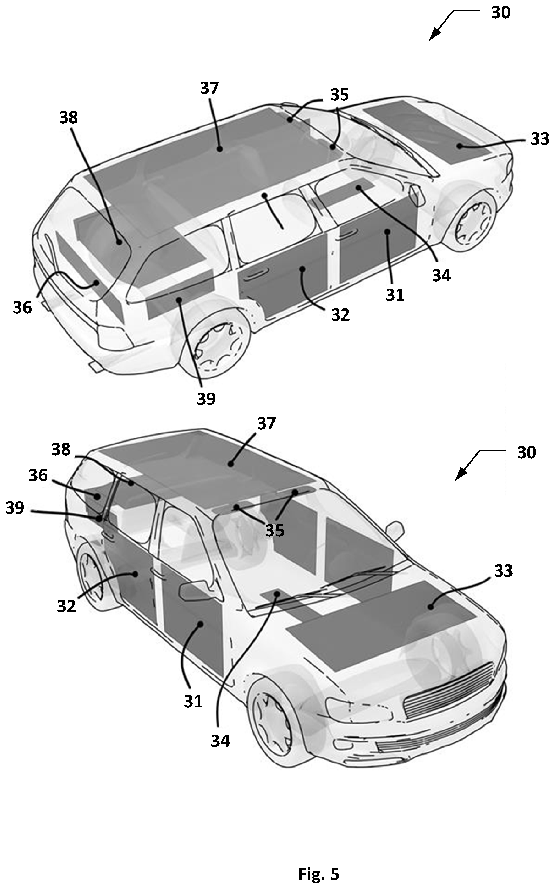

As shown in Figure 5, the composite material may be comprised in various automotive interior parts, demonstrating its adaptability to various design and performance requirements, including, but not limited to: front and rear door panels (31, 32), hood liners (33), consoles (34), sun visors (35), trunk liners (36), headliners (37), parcel shelves (38), and trunk side trims (39) of a vehicle (30).

These components benefit from the lightweight, formable, and recyclable nature of the disclosed composite, as well as the environmental advantages of incorporating post-consumer and post-industrial waste into new products.

Due to its composition, wherein up to 80%, preferably from 60% to 80%, by weight of the fibres are recycled fibres, through mechanical defibration processes, derived from post-consumer domestic waste, end-of-life vehicles (ELV), and/or post-industrial waste, and its structure formed through mechanical bonding, the composite material offers both environmental and functional advantages. It is particularly suitable for thermoforming and other shaping processes used in the manufacture of automotive components. Additionally, the material's fibre-based structure can provide desirable acoustic, thermal, and mechanical properties depending on the application, making it a sustainable alternative to conventional materials used in interior vehicle design.

The disclosure also supports circular economy models, as the composite material can be fully recovered and reprocessed through mechanical separation, as described in the closed-loop process of **Figure 1****.** Thus, waste from one vehicle's end-of-life stage may be reintroduced as raw material in the production of new components.

### EXAMPLES

The following examples illustrate the preparation and properties of possible composite materials according to the present disclosure. These examples demonstrate the use of recycled materials and innovative processes to achieve high-performance composites.

### Example 1: Composite Material with three Layer; intermediate layer consisting of PET

A composite material with three distinct layers considered. The outer layer of recycled fibres consisted of 80% recycled polyester derived from end-of-life polyester automobile parts, specifically seatbelts and 20% thermofusible polyester fibres with low melting point. The intermediate was composed of polyethylene terephthalate (PET) for structural integrity and bonding and third layer of recycled fibres consisted of 60% recycled polyester derived from end-of-life polyester automobile parts, specifically seatbelts and 40% thermofusible polyester fibres with low melting point .

In an embodiment, the outer layer of recycled fibres has a surface density of 400g/m², whereas the other has a surface density of 900 g/m².

**Table 1: Properties of the Composite Material with three layers, intermediate layer of PET.**

| **Property** | **Value** |
|---|---|
| Thickness | 5mm ± 0.3mm |
| Grams per square meter (GSM) | 1450 g/m² |

### Example 2: Composite Material with four layers including aesthetic outer fabric

A composite material with three distinct layers considered. The outercomposite layer of recycled fibres consisted of 85% recycled polyester derived from end-of-life polyester automobile parts, specifically seatbelts and 15% thermofusible polyester fibres with low melting point. The intermediate was composed of polyethylene terephthalate (PET) for structural integrity and bonding and third layer of recycled fibres consisted of 60% recycled polyester derived from end-of-life polyester automobile parts, specifically seatbelts and 40% thermofusible polyester fibres with low melting point. The outer layer was wrapped with an aesthetical recycled Polyester fabric for finishing using a reactive polyolefin reactive hotmelt.

In an embodiment, the outer fabric of recycled Polyester with GSM of 250g/m² wrapped on a composite layer of recycled fibres with a GSM of 300g/m², whereas the other has a surface density of 800 g/m².

**Table 2: Properties of the composite material with four layers including aesthetic outer fabric.**

| **Property** | **Value** |
|---|---|
| Thickness | 4,8mm ± 0.3mm |
| Grams per square meter (GSM) | 1420 g/m² |

### Example 3: Composite Material with two Layers

A composite material with two distinct layers was considered. The outer layer of recycled fibres consisted of 85% recycled polyester derived from end-of-life polyester automobile parts, specifically seatbelts and 15% thermofusible polyester fibres with low melting point. The second layer was composed of a compact Polypropylene foil (PP) for structural integrity and bonding.

The outer layer of recycled fibres have a mass per unit of area of 300 g/m², whereas the innerlayer of PP has a mass per unit area of 1800 g/m².

**Table 3: Properties of the composite material with two layers.**

| **Property** | **Value** |
|---|---|
| Thickness | 2,5 ± 0,3 mm |
| Mass per unit of area | 2100g/m² |

### Experimental Data

The following experimental data illustrates the performance and advantages of the disclosed composite material, in particular when comprised in automotive interior parts. For the purposes of the testing depicted bellow, the composite material comprised two nonwoven fabric layers and one compact polymeric layer, moulded by thermoforming into a3D shape configuration. The results outlined below highlight the material's mechanical properties, thermal stability, and suitability for use in automotive applications.

**Testing 1: Mechanical testing**

| **Test designation** | **Standard/Test conditions** | **Results** |
|---|---|---|
| Tear strength at initial condition | DIN EN 29073-3 | ≥250 N |
| Tear strength after 2h water immersion aging | DIN EN 29073-3 | ≥250 N |
| Tear propagation strength | DIN EN 53859-4 | ≥40 N |

**Testing 2: Environmental - Cabin air quality**

| **Test designation** | **Standard/Test conditions** | **Results** |
|---|---|---|
| Odor test | VDA 270 | ≤ 4 |
| | Variant B3 | |
| COV's | VDA 277 | ≤ 50 µgC/g |
| Fogging (Condensable constituents) | DIN 75201 | The fogging index ≥75% |
| | Method A | |

**Testing 3: Resistance, ageing and durability testing**

| **Test designation** | **Standard/Test conditions** | **Results** |
|---|---|---|
| Colour fastness to daylight | Test duration: 3 cycles | ≥ 4 according to ISO 105-A02 |
| | Parameters: | |
| | - Black standard temperature (BST): (100±3) ºC | |
| | - Specimen room temperature: (65±3) ºc. | |
| | -Relative humidity: (20±10) % | |
| | -Irradiance of the burner to 1.4 W/m2 for a wavelength of 420 nm. | |
| | Specimen size: 130 mm x 45 mm | |
| Climatic ageing | Test with cycles: 40ºC and 95% RH; -20ºC and 90ºC | After exposure and return to ambient temperature, without damage on product |

**Testing 4: Regulation characteristics**

| **Test designation** | **Standard/Test conditions** | **Results** |
|---|---|---|
| Flammability | ISO 3795 at initial state | Horizontal rate of combustion: ≤ 100 mm/min |

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.

The following dependent claims further set out particular embodiments of the disclosure.

## Claims

1. A composite material for automotive applications, comprising at least one nonwoven fabric layer
wherein the at least one nonwoven fabric layer comprises fibres, wherein up to 80% by weight of the fibres are recycled fibres;
wherein the recycled fibres are obtained from post-consumer domestic waste, end-of-life vehicles (ELV), post-industrial waste, or a combination thereof; wherein the composite has a thickness of 2 to 10 mm;
wherein the composite exhibits a tear strength of at least 250 N, according to DIN EN 29073-3, at a recycled fibre content of at least 20 wt.%;
wherein the composite is substantially free of thermoset binders; and
wherein the fibres of the at least one nonwoven fabric layer are bonded together to form said composite material by mechanical and/or thermal bonding.

2. The composite material according to the previous claim, wherein the composite material is recoverable by mechanical separation and/or reprocessing.

3. The composite material according to any of the previous claims, wherein the fibres are oriented in a configuration selected from the group consisting of parallel-laid, cross-laid, random-laid, and z-directional orientations, preferably wherein the fibres of the at least one nonwoven fabric layer are mechanically bonded, preferably by needle punching, Spunlace (Hydroentanglement) or Stitchbonding and/or chemically bounded by thermoplastic binders.

4. The composite material according to any of the previous claims, further comprising a decorative layer such as synthetic leather, natural leather and/or fabrics, applied to the at least one nonwoven fabric layer, preferably by means of a hot melt thermoplastic adhesive.

5. The composite material according to any of previous claims, wherein the fibres of the at least one nonwoven fabric layer are selected from one or more of: polyester recycled fibres, preferably from end-of-life car seatbelts, seat covers, carpets, industrial waste, and/or post-consumer waste; polypropylene recycled fibres, preferably from end-of-life automotive components comprising Polypropylene fibres, such as interior trims, door panels, seat covers, air filters or headliners, and/or industrial waste and/or post-consumer waste; polyamide recycled fibres, preferably from end-of-life car airbags and/or industrial waste and/or post-consumer waste; hemp fibres, recycled or non-recycled; flax fibres, recycled or non-recycled; jute fibres, recycled or non-recycled; sisal fibres, recycled or non-recycled; cotton fibres, recycled or non-recycled; or any combination thereof.

6. The composite material according to any of the previous claims, wherein the at least one nonwoven fabric layer further comprises thermoplastic fusible fibres that soften or melt upon heating for thermoforming of the composite material.

7. The composite material according to any of the previous claims, further comprising at least one compact thermoplastic layer for thermoforming, in particular the at least one thermoplastic layer being selected from the group consisting of polyethylene terephthalate group (PET), thermoplastic elastomer group, such as TPE-O, TPE-V, TPE-S, TPE-A, TPE-U, Ethylene-Vinyl Acetate group (EVA), polypropylene group (PP), polyethylene group (PE), polyamide group (PA), polyurethane group (PU), Polybutylene terephthalate group (PBT), polycarbonate group (PC), Acrylonitrile Butadiene Styrene group (ABS), acrylonitrile styrene acrylate (ASA), styrene acrylonitrile (SAN) or any combination thereof.

8. The composite material according to any of the previous claims, comprising one compact polymeric layer and one nonwoven fabric layer; wherein said layers are stacked and thermally bonded forming a multilayer structure.

9. The composite material according to any of the previous claims, comprising one compact thermoplastic layer and one or two nonwoven fabric layers or two compact thermoplastic layers and three nonwoven fabric layers; wherein said layers are intercalated and thermally bonded forming a multilayer structure.

10. The composite material according to any of the previous claims, wherein one/or two outermost nonwoven fabric layers have a mass per unit of area of 200 to 700 g/m², preferably 250 to 650 g/m².

11. A method for producing a composite material for automotive applications described in any of the previous claims, comprising the following steps:
collecting end-of-life materials comprising fibres from post-consumer domestic waste, end-of-life vehicles (ELV), post-industrial waste, or a combination thereof;
mechanically separating the materials to extract the recycled fibres;
forming at least one nonwoven fabric layer by mechanical bonding fibres including the extracted recycled fibres;
wherein the at least one nonwoven fabric layer comprises at up to 80% by weight of recycled fibres.

12. The method according to the previous claim, further comprising the following steps:
thermoforming the at least one nonwoven fabric layer, or the multilayer structure, by applying heat to soften or melt the stacked at least one compact polymeric layer and/or thermal fusible fibres of the at least one fibre layer;
pressing the at least one nonwoven fabric layer, or the multilayer structure, in a mould to form a desired shape;
cooling and solidifying the moulded composite material.

13. The method according to any one of the previous claims 11 to 12, further comprising a lamination step, preferably a hot lamination step, wherein two or more nonwoven fabric layers are laminated together, or wherein the at least one compact polymeric layer and the at least one nonwoven fabric layer stacked are laminated together for forming a laminated composite.

14. The method according to any of the previous claims 11 to 13, further comprising finishing processes, including washing the collected end-of-life materials, in particular the washing including the use of low fogging and COV chemical and biological substances and combinations thereof to remove greases, oils, other contaminants, and/or prepare the fibers for subsequent processing

15. An automotive interior part comprising a composite material described in any of the claims 1 to 10 and obtainable by the method for producing a composite material for automotive applications described in any of the claims 11 to 14, preferably wherein the interior part is a front door panel, a rear door panel, a hood liner, a centre console, a sun visor, a trunk liner, a headliner, a parcel shelf, or a trunk side trim .
